(19) Europäisches Patentamt
European Patent Office
Office européen des brevets

(11) **EP 1 087 208 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(51) Int Cl.:
*G01C 21/28* *(2006.01)*   *G01C 21/16* *(2006.01)*
*G01S 5/14* *(2006.01)*   *G01C 17/38* *(2006.01)*

(21) Anmeldenummer: **00118041.3**

(22) Anmeldetag: **23.08.2000**

(54) **Verfahren zum Navigieren eines Fahrzeugs**

Vehicle navigation method

Méthode pour la navigation d'un véhicule

(84) Benannte Vertragsstaaten:
**DE FR GB**

(30) Priorität: **21.09.1999 DE 19945120**

(43) Veröffentlichungstag der Anmeldung:
**28.03.2001 Patentblatt 2001/13**

(73) Patentinhaber: **SIEMENS AKTIENGESELLSCHAFT**
**80333 München (DE)**

(72) Erfinder: **de Jong, Cornelis Dick**
**5704 DB Helmond (NL)**

(56) Entgegenhaltungen:
**EP-A- 0 373 317    EP-A- 0 496 517**
**EP-A- 0 844 462    DE-A- 4 208 158**
**GB-A- 2 216 272    JP-A- 1 295 312**
**US-A- 4 743 913**

• **PATENT ABSTRACTS OF JAPAN vol. 008, no. 219 (P-306), 5. Oktober 1984 (1984-10-05) & JP 59 104510 A (MITSUBISHI DENKI KK), 16. Juni 1984 (1984-06-16)**

EP 1 087 208 B1

**Beschreibung**

Die Erfindung betrifft ein Verfahren zum Navigieren eines Fahrzeugs, bei dem eine Richtungsänderung des Fahrzeugs durch Integration eines eine Richtungsänderungsgeschwindigkeit anzeigenden Signals ermittelt wird, wobei das Ergebnis der Integration durch folgende Schritte korrigiert wird:

a) Bestimmen der absoluten Richtung des Fahrzeugs zu einem ersten Zeitpunkt mit Hilfe von externen Hilfsmitteln,

b) Bestimmen der absoluten Richtung des Fahrzeugs zu einem zweiten Zeitpunkt mit Hilfe von externen Hilfsmitteln,

c) Ermitteln der Differenz der absoluten Richtungen und

d) Normieren des Ergebnisses der Integration auf diese Differenz, wobei eine neue Korrekturgröße aus einer bisher verwendeten Korrekturgröße ermittelt wird.

Die Schritte a-c müssen hierbei nicht bei jeder Richtungsänderung durchgeführt werden. Unter externen Hilfsmitteln sollen solche verstanden werden, die keinen Einfluss auf das Gyroskop bzw. auf eine vergleichbare Einheit haben und von dem Gyroskop nicht beeinflusst werden. Die Differenz zwischen den beiden absoluten Richtungen lässt sich relativ genau bestimmen. Wenn die Empfindlichkeit stimmt, müsste das Ergebnis der Integration dieser Richtungsdifferenz entsprechen. Falls das nicht der Fall ist, kann man eine Korrekturgröße beispielsweise dadurch bilden, dass man die bislang verwendete Korrekturgröße multipliziert mit dem Quotienten aus der Differenz der absoluten Richtungen und dem Integrationsergebnis. Eine derartige Kalibrierung kann während der Fahrt vorgenommen werden, weil das Fahrzeug hier öfters eine Richtungsänderung durchmacht. Damit lassen sich auch Einflussfaktoren berücksichtigen, die die Empfindlichkeit während der Fahrt verändern. Die Kalibrierung lässt sich mit relativ wenigen zusätzlichen Schritten durchführen, wodurch der Verarbeitungsaufwand für das Navigationssystem klein bleibt. Zusätzlich erhält man den Vorteil, dass durch diese Kalibrierung auch der Einfluss der Einbaulage des Gyroskopen auf sein Ausgangssignal berücksichtigt werden kann.

Ein derartiges Verfahren ist beispielsweise aus EP 0 844 462 A2 bekannt. Dort ist ein Verfahren und eine Vorrichtung zur Positionsbestimmung eines bewegten Fahrzeugs offenbart, bei dem eine Richtungsänderung des Fahrzeugs durch Integration eines eine Richtungsgeschwindigkeit anzeigenden Signals, das beispielsweise durch einen Gyroskopen erzeugt wird, ermittelt wird. Mit Hilfe von externen Hilfsmitteln, wie beispielsweise ein GPS-System, wird in drei aufeinanderfolgenden Zeitpunkten die absolute Richtung des Fahrzeugs bestimmt. Bewegt sich das Fahrzeug zu allen drei Zeitpunkten geradeaus, wird diese Messung zur Offset-Korrektur des durch Integration ermittelten Ergebnisses verwendet. Bewegt sich das Fahrzeug zum mittleren Zeitpunkt auf einer Kurve, dient die Messung zur Ermittlung eines Korrekturfaktors der Korrekturgröße. Dabei wird die Differenz der absoluten Richtungen der ersten und dritten Messung gebildet und das Ergebnis der Integration auf diese Differenz normiert. Die neue Korrekturgröße ergibt sich aus dem Quotienten der bisherigen Korrekturgröße und dem Korrekturfaktor.

Der Bedarf an Navigationshilfen ist in den letzten Jahren kontinuierlich gestiegen. Hierbei möchte man dem Fahrer eines Kraftfahrzeugs eine möglichst günstige Route aufzeigen können, auf der er von einem Ausgangsort zum Zielort gelangen kann. Die Gesamtaufgabe gliedert sich hierbei in drei Teile, nämlich die Positionsbestimmung des Fahrzeugs, die Routenplanung und die Übermittlung der Route an den Fahrer. Die vorliegende Erfindung betrifft den ersten Abschnitt, nämlich die Positionsbestimmung des Fahrzeugs.

Für die Positionsbestimmung des Fahrzeuges stehen seit einiger Zeit Navigationssatelliten zur Verfügung, die einen Teil eines "Global Positioning System" oder GPS bilden. Mit Hilfe der Satelliten ist zwar eine Standort- oder Positionsbestimmung mit wenigen Einschränkungen überall möglich. Die hierbei erzielbare Genauigkeit liegt jedoch nur im Bereich von 100 m. Dies mag bei Überlandfahrten in den meisten Fällen ausreichen. Kritisch ist diese "Ungenauigkeit" aber dort, wo der Abstand von Straßen kleiner als diese Größe ist, beispielsweise in Städten oder an Verkehrsknotenpunkten, wo mehrere Straßen in einem relativ dichten Abstand aufeinander treffen.

Man ist daher in bestimmten Bereichen dazu übergegangen, eine "Koppelnavigation" zu verwenden, bei der die Position des Fahrzeugs dadurch bestimmt wird, daß man Richtung und Entfernung von einem Ausgangspunkt aus ermittelt. Die aktuelle Position des Fahrzeugs wird also durch eine Art Vektoraddition ermittelt. Ein derartiges Verfahren wird auch als "dead reckoning" bezeichnet. Allerdings summieren sich bei diesem Verfahren Fehler, die bei jeder Vektorbildung entstehen, auf, so daß man auch hier Gefahr läuft, die Position des Fahrzeugs nicht mit der gewünschten Genauigkeit bestimmen zu können.

Für die Richtungsbestimmung werden im bekannten Fall Gyroskope verwendet. Gyroskope erzeugen ein Ausgangssignal, für das sich bei Geradeausfahrt oder Stillstand (keine Richtungsänderung) die Bezeichnung "Drift" eingebürgert hat. Wenn das Fahrzeug eine Richtungsänderung vornimmt, ergibt sich eine Änderung des Ausgangssignals, die von der Winkelgeschwindigkeit $\omega$ des Fahrzeugs abhängt. Durch Integration dieses Signals über der Zeit kann man dann die Änderung der Richtung ermitteln.

Ein Gyroskop kann beispielsweise einen Ausgangsspannungsbereich von 0 bis 5 V haben, wobei in der Neutralstellung, d.h. wenn das Fahrzeug geradeaus fährt oder steht, eine Ausgangsspannung (Drift) von 2,5 V abgegeben wird. Die Änderung des Ausgangssignals bezogen auf die Winkelgeschwindigkeit, d.h. mV/(°/s), wird als Empfindlichkeit (sensitivity) bezeichnet.

Man hat bisher für die Empfindlichkeit einen festen Wert angenommen, beispielsweise 25 mV für 1°/sec. Diese Annahme war zwar vielfach richtig. Man kann aber beobachten, dass die Empfindlichkeit einer relativ großen Streuung bei verschiedenen Gyroskopen unterliegt und auch von der Neigung des Gyroskopen aufgrund der Einbaulage abhängig ist. Die Streubreite kann hierbei über 10 % betragen.

Man kann sich leicht vorstellen, dass die Richtungsermittlung dann relativ ungenau wird, wenn das Fahrzeug auf der Auffahrrampe eines Parkhauses mehrere Kreise gefahren ist, d.h. Drehungen um ein Vielfaches von 360° ausgeführt hat. Hier kann leicht ein Richtungsfehler von 90° zustande kommen.

Aus EP 0 496 517 A1 ist ein Verfahren zur Ermittlung des Korrekturfaktors eines Gyrometers bekannt, wobei das Gyrometer in einem Fahrzeug montiert wird und das Fahrzeug anschließend um einen bestimmten Winkel gedreht wird. Das Signal des Gyrometers, das die Richtungsgeschwindigkeit anzeigt, wird über diesen Zeitraum integriert und das Ergebnis durch den definierten Winkel geteilt, um den das Fahrzeug gedreht wurde. Dadurch erhält man einen Korrekturfaktor. Als externe Hilfsmittel, um den Winkel festzulegen, um den das Fahrzeug gedreht wird, werden Markierungen verwendet, die beispielsweise auf der Straße angebracht werden. Diese Markierungen zeigen die absoluten Richtungen des Fahrzeugs an. Der fest vorgegebene Winkel zwischen den Markierungen entspricht dabei der Differenz der absoluten Richtungen.

JP 01295312 offenbart eine Führungseinrichtung für ein unbemanntes Fahrzeug, wobei die Richtungsänderung des Fahrzeugs durch Integration des Signals eines Gyrometers ermittelt wird. Das Ergebnis der Integration wird mit einem Korrekturfaktor korrigiert. Dieser ist das Ergebnis der Normierung des Integrationsergebnisses auf einem definierten Winkel, um den das Fahrzeug vorher gedreht wurde. Die absoluten Richtungen, die den Winkel definieren, werden durch eine Markierung festgelegt.

Der Erfindung liegt die Aufgabe zugrunde, Richtungen genauer bestimmen zu können.

Diese Aufgabe wird bei einem Verfahren gemäss Anspruch 1 dadurch gelöst, dass die Korrekturgröße gefiltert wird, wobei die Differenz der absoluten Richtungen zur Gewichtung mit einfließt.

Da die Korrekturgröße gefiltert wird, wird der Einfluss einer aktuellen Korrekturgrößenermittlung immer in einen größeren Zusammenhang gestellt, so dass sich beispielsweise "Ausreißer" nicht allzu negativ auswirken. Bei einer derartigen Filterung kann man auch dafür sorgen, dass Korrekturgrößen, die nach einer großen Richtungsänderung ermittelt werden, ein größeres Gewicht bekommen, als Korrekturgrößen, die nach einer kleinen Richtungsänderung ermittelt werden.

Vorzugsweise werden als externe Hilfsmittel Satelliten verwendet. Die Positionsbestimmung mit Hilfe von Satelliten ist zwar relativ ungenau, wie oben angegeben. Die Richtungsbestimmung mit Hilfe von Satelliten ist jedoch wesentlich genauer. Man wertet das Signal der Navigationssatelliten üblicherweise im Abstand von einer Sekunde aus, also mit einer Frequenz von 1 Hz. Man kann also davon ausgehen, dass sich in diesem kurzen Zeitraum der systematische Positionsbestimmungsfehler nicht wesentlich geändert hat, so dass man bei einer Differenzbildung zwischen zwei Positionen den Fehler eliminiert. Man kann die Richtung gegenüber den Satelliten auch relativ einfach über den Doppler-Effekt bestimmen.

Alternativ oder zusätzlich dazu können als externe Hilfsmittel Straßen verwendet werden, auf die das Fahrzeug abgebildet wird. Diese Vorgehensweise, d.h. die Abbildung, ist auch als "map matching" bekannt. Man geht hierbei von der Annahme aus, dass sich ein Fahrzeug mit einer relativ großen Wahrscheinlichkeit auf einer Straße bewegen wird, die sich in der Nähe von Positionen befindet, die beispielsweise durch die Koppelnavigation oder mit Hilfe von Satelliten ermittelt worden ist. Diese Vorgehensweise liefert in vielen Fällen zumindest für die Richtungsbestimmung ausreichend genaue Angaben, weil die Richtung der Straße festliegt.

Vorzugsweise sind die Straßen in einer Datenbank abgelegt. Dies erleichtert die Auswertung mit Hilfe eines Computers, der ohnehin für die Auswertung der sonstigen bei der Navigation anfallenden Daten benötigt wird.

Mit Vorteil wird die Korrekturgröße nur dann ermittelt, wenn die Differenz der absoluten Richtungen mindestens 60° beträgt. In diesem Fall ist das Ergebnis der Integration groß genug, so dass hier beispielsweise ein Diskretisierungsfehler keine größere Rolle mehr spielt. Richtungsänderungen mit einer Differenz von mindestens 60° treten beispielsweise dann auf, wenn das Fahrzeug rechtwinklig abbiegt. Größere Richtungsänderungen ergeben sich beispielsweise dann, wenn das Fahrzeug an einem Autobahnkreuz nach links abbiegen will. Da eine Überquerung der Gegenfahrbahn ausgeschlossen ist, muss das Fahrzeug hier üblicherweise eine Richtungsänderung um 270° ausführen.

Bevorzugterweise wird die Korrekturgröße nur dann ermittelt, wenn in dem Zeitraum zwischen dem ersten Zeitpunkt und dem zweiten Zeitpunkt eine vorbestimmte mittlere Winkelgeschwindigkeit nicht unterschritten wird. Beispielsweise wird die Kalibrierung ausgesetzt, wenn die mittlere Winkelgeschwindigkeit kleiner als 1°/sek. ist. In diesem Fall verringert man das Risiko, dass sich Drift-Abweichungen negativ auf die Ermittlung der Korrekturgröße auswirken.

Die Erfindung wird im folgenden anhand eines bevorzugten Ausführungsbeispiels in Verbindung mit der Zeichnung näher beschrieben. Hierin zeigen:

Fig. 1     eine schematische Darstellung eines Navigationssystems,

Fig. 2     eine beispielhafte Fahrtstrecke zur Erläuterung der Vorgehensweise und

Fig. 3     einige Signalverläufe.

Ein System 1 zum Navigieren eines Fahrzeugs ist nur mit einem Ausschnitt dargestellt, der sich mit der Positionsbestimmung befaßt. Eine Verarbeitungseinrichtung 2 ist mit einer Antenne 3 verbunden, die Signale von Navigationssatelliten 4 empfängt. Mit Hilfe von Satelliten werden die Positionen und Richtungen im Abstand von einer Sekunde, also mit einer Frequenz von 1 Hz ermittelt. Über die Laufzeit von Signalen kann man die Entfernung zu den Satelliten 4 errechnen. Wenn die Entfernung zu mindestens drei Satelliten bekannt ist, dann kann man die Position des Fahrzeugs auf der Erde errechnen. Diese Position ist allerdings mit gewissen Fehlern behaftet.

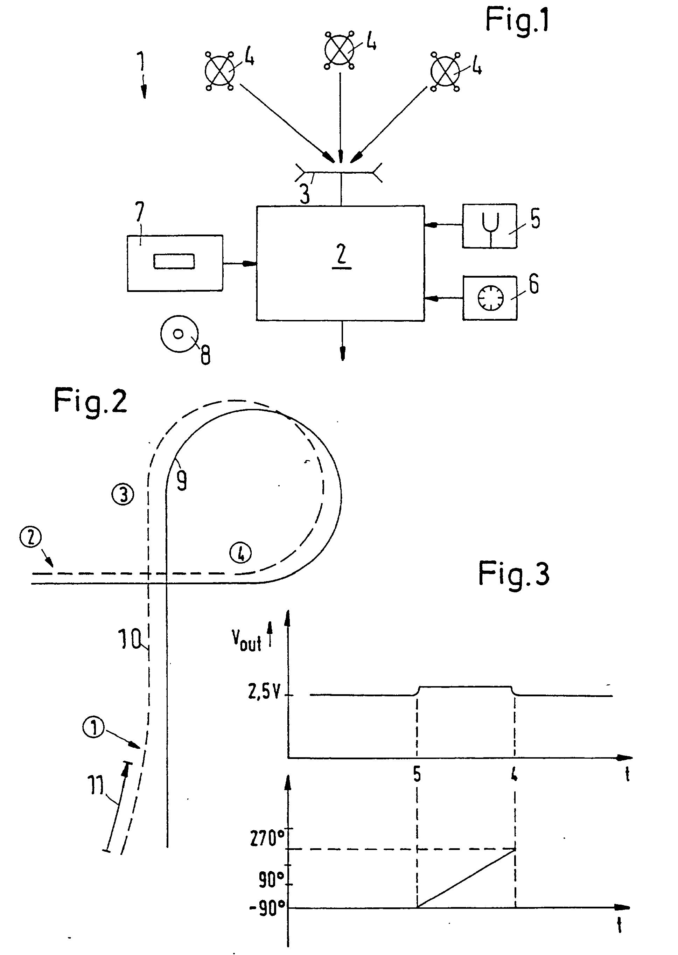

Ferner ist die Verarbeitungseinrichtung 2 verbunden mit einem schematisch dargestellten Gyroskopen 5, dessen Ausgangssignal in Fig. 3 (oberer Graph) dargestellt ist. Schließlich ist noch ein Tachometer 6 mit der Verarbeitungseinrichtung verbunden, der der Verarbeitungseinrichtung 2 die zurückgelegte Wegstrecke mitteilt.

Die Verarbeitungseinrichtung 2 ist mit einer ebenfalls schematisch dargestellten Datenbank 7 verbunden, die auch durch ein Lesegerät für einen Datenträger 8 gebildet sein kann, beispielsweise eine CD-ROM. Auf der Datenbank 7 können Straßen so abgelegt sein, daß sie von der Verarbeitungseinrichtung 2, beispielsweise einem Computer, verwertet werden können. Die Verarbeitungseinrichtung 2 kann beispielsweise die aktuelle Position des Fahrzeugs auf der Straße abbilden, auf der sich das Fahrzeug gerade befindet. Diese Vorgehensweise wird auch als "map matching" bezeichnet. Darüber hinaus dient die Datenbank 7 zur Routenplanung, die aber im vorliegenden Fall von untergeordnetem Interesse ist.

Das System verwendet zur Standort- oder Positionsbestimmung des Fahrzeugs zu einem wesentlichen Teil eine sogenannte "Koppelnavigation", die auch als "dead reckoning" bezeichnet wird. Von einem bekannten Standort aus wird ermittelt, welche Entfernung das Fahrzeug in welche Richtung zurücklegt. Die Entfernung wird mit Hilfe des Tachometers 6 ermittelt, die Richtung mit Hilfe des Gyroskopen 5. Durch eine vektorielle Addition der einzelnen gerichteten Strecken läßt sich die aktuelle Position des Fahrzeugs bestimmen.

Das Gyroskop 5 gibt dann, wenn das Fahrzeug geradeaus fährt, eine konstante Spannung von beispielsweise 2,5 V ab. Diese konstante Ausgangsspannung des Gyroskopen 5 wird auch als "Drift" bezeichnet.

Wenn sich die Richtung des Fahrzeugs ändert, ändert sich auch die Ausgangsspannung des Gyroskopen 5. Die Abweichung des Ausgangssignals von seinem "Ruhewert" ist abhängig von der Geschwindigkeit, mit der das Fahrzeug die Richtung ändert. Diese Winkelgeschwindigkeitsabhängigkeit wird als Empfindlichkeit bezeichnet. Die Empfindlichkeit normiert besser gesagt die Abweichung des Ausgangssignals auf eine Winkelgeschwindigkeit. Wenn man diese Abweichung über der Zeit integriert, wie dies in Fig. 3 unten dargestellt ist, dann erhält man eine Angabe über den zurückgelegten Winkel.

Fig. 2 zeigt beispielhaft den Verlauf einer Straße 9. Ein derartiger Straßenverlauf ergibt sich beispielsweise bei einem Autobahnkreuz, an dem ein nach Norden fahrendes Fahrzeug nach Westen abbiegen möchte. Es wird angenommen, daß sich das Fahrzeug auf der Straße 9 befindet.

Gestrichelt eingezeichnet ist ein Verlauf 10, den die Verarbeitungseinrichtung 2 durch Koppelnavigation errechnet hat. Aufgrund einiger Ungenauigkeiten und Fehler, die sich bei dieser Berechnung ergeben haben, stimmt der Verlauf 10 nicht genau mit der Straße 9 überein. Insbesondere kann man in einem Abschnitt 11 erkennen, daß auch die Richtung des Verlaufs 10 nicht mit der Richtung der Straße 9 übereinstimmt.

Zu einem Zeitpunkt ① wird nun mit Hilfe der Satelliten 4 die Richtung des Fahrzeuges bestimmt. Dieser Wert wird als absolute Richtung angenommen. Die Koppelnavigation der Verarbeitungseinrichtung 2 nimmt diesen Wert nun als neue Richtung an. Das Fahrzeug durchläuft nun eine Kurve von 270°. Zu einem Zeitpunkt ② wird wiederum eine Richtungsbestimmung mit Hilfe der Satelliten 4 vorgenommen. Die Koppelnavigation in der Verarbeitungseinrichtung wird wieder auf diesen neuen Richtungswert gesetzt.

Die Drehung um 270° beginnt am Zeitpunkt ③ und endet am Zeitpunkt ④. Wie aus Fig. 3 zu erkennen ist, ändert sich zwischen dem ersten Zeitpunkt ③ und dem zweiten Zeitpunkt ④ die Ausgangsspannung des Gyroskopen 5. Die Ausgangsspannung steigt nämlich von 2,5 V auf 2,6 V. Darunter ist das integrierte Ausgangssignal aufgetragen, das dementsprechend 270° anzeigen soll.

Zu den Zeitpunkten ① und ② wurde die absolute Richtung bestimmt und zwar mit Mitteln, die weder durch das Gyroskop 5 beeinflußt werden noch dieses beeinflussen. Wenn der Skalierungsfaktor S des Gyroskops 5 stimmt, dann wird sich nach der Integration ebenfalls ein Ausgangswert von 270° für das gewählte Beispiel ergeben.

Man kann nun einen neuen Skalierungsfaktor $S_{neu}$ aus dem bisher verwendeten Skalierungsfaktor $S_{alt}$, dem

aus der Differenz der absoluten Richtung ermittelten Wert A und der sich aus dem Integrationsergebnis I ergebenden Richtungsdifferenz dadurch ermitteln, daß man bildet

$$S_{neu} = S_{alt} \bullet \frac{A}{I}$$

Man kann nun den Wert $S_{neu}$ auch noch filtern, in dem man beispielsweise folgende Filterfunktion verwendet

$$S_{Filter} = (1 - e^{\frac{-A}{\varphi}}) \bullet S_{neu} + e^{\frac{-A}{\varphi}} S_{alt}$$

Hierbei wird für $\varphi$ ein mehr oder weniger frei wählbarer Referenzwinkel vorgegeben, der beispielsweise 1.000° beträgt. Auf diese Weise kann man die Größe der Richtungsänderung noch in die Gewichtung einfließen lassen, d.h. wenn die gefahrene Kurve größer ist, hat auch $S_{neu}$ ein größeres Gewicht auf $S_{Filter}$.

Man kann nun noch verschiedene Bedingungen vorsehen, die erfüllt sein müssen, damit der Skalierungsfaktor S, den man auch als Korrekturgröße bezeichnen kann, überhaupt ermittelt werden kann. Beispielsweise muß die gefahrene Kurve einen Winkel von 60° oder mehr umfassen. Zwischen dem ersten Zeitpunkt ① und dem zweiten Zeitpunkt ② darf die mittlere Winkelgeschwindigkeit nicht kleiner als ein vorbestimmter Wert sein. Wenn dieser Wert beispielsweise 1°/sek. ist, muß die gesamte Richtungsänderung mindestens 60° betragen, wenn die Zeitdifferenz 60 sek. beträgt.

**Patentansprüche**

1. Verfahren zum Navigieren eines Fahrzeugs, bei dem eine Richtungsänderung (I) des Fahrzeugs durch Integration eines eine Richtungsänderungsgeschwindigkeit anzeigenden Signals ermittelt wird, wobei das Ergebnis der Integration durch folgende Schritte korrigiert wird:

   a) Bestimmen der absoluten Richtung des Fahrzeugs zu einem ersten Zeitpunkt mit Hilfe von externen Hilfsmitteln,
   b) Bestimmen der absoluten Richtung des Fahrzeugs zu einem zweiten Zeitpunkt mit Hilfe von externen Hilfsmitteln,
   c) Ermitteln der Differenz (A) der absoluten Richtungen und
   d) Normieren des Ergebnisses (I) der Integration auf diese Differenz (A), wobei eine neue Korrekturgröße ($S_{neu}$) aus einer bisher verwendeten Korrekturgröße ($S_{alt}$) **dadurch** ermittelt wird dass man bildet

$$S_{neu} = S_{alt} \cdot \frac{A}{I}$$

   **dadurch gekennzeichnet, dass** die neue Korrekturgröße gefiltert wird, wobei die Differenz (A) der absoluten Richtungen zur Gewichtung mit einfließt.

2. Verfahren nach Anspruch 1, **dadurch gekennzeichnet, daß** als externe Hilfsmittel Satelliten verwendet werden.

3. Verfahren nach Anspruch 1 oder 2, **dadurch gekennzeichnet, daß** als externe Hilfsmittel Straßen verwendet werden, auf die das Fahrzeug abgebildet wird.

4. Verfahren nach Anspruch 3, **dadurch gekennzeichnet, daß** die Straßen in einer Datenbank abgelegt sind.

5. Verfahren nach einem der Ansprüche 1 bis 4, **dadurch gekennzeichnet, daß** eine Korrekturgröße nur dann ermittelt wird, wenn die Differenz der absoluten Richtungen mindestens 60° beträgt.

**6.** Verfahren nach einem der Ansprüche 1 bis 5, **dadurch gekennzeichnet, daß** die Korrekturgröße nur dann ermittelt wird, wenn in dem Zeitraum zwischen dem ersten Zeitpunkt und dem zweiten Zeitpunkt eine vorbestimmte mittlere Winkelgeschwindigkeit nicht unterschritten wird.

**Claims**

**1.** Method for navigating a vehicle, in which a change in the vehicle's direction (I) is ascertained by integration of a signal indicating a speed of change in direction, where the result of the integration is corrected by the following steps:

a) The absolute direction of the vehicle at a first instant is determined using external auxiliary means,
b) The absolute direction of the vehicle at a second instant is determined using external auxiliary means,
c) The difference (A) between the absolute directions is ascertained, and
d) The result (I) of the integration is normalized to this difference (A), with a new correction variable ($S_{new}$) being ascertained from a correction variable ($S_{old}$) used thus far by forming $S_{new} = S_{old} \bullet \dfrac{A}{I}$, **characterized in that** the new correction variable is filtered, with the difference (A) between the absolute directions being included in the weighting.

**2.** Method according to Claim 1, wherein the external auxiliary means used are satellites.

**3.** Method according to Claim 1 or 2, wherein the external auxiliary means used are roads on which the vehicle is depicted.

**4.** Method according to Claim 3, wherein the roads are stored in a database.

**5.** Method according to Claims 1 to 4, wherein a correction variable is ascertained only if the difference between the absolute directions is at least 60°.

**6.** Method according to one of Claims 1 to 5, wherein the correction variable is ascertained only if a predetermined angular speed is not undershot in the period of time between the first instant and the second instant.

**Revendications**

**1.** Méthode de navigation d'un véhicule, au cours de laquelle on détermine un changement (I) de direction du véhicule par intégration d'un signal indiquant une vitesse de changement de direction, le résultat de l'intégration étant corrigé par les étapes suivantes:

a) Détermination, à l'aide de moyens auxiliaires externes, de la direction absolue du véhicule à un premier instant,
b) Détermination, à l'aide de moyens auxiliaires externes, de la direction absolue du véhicule à un deuxième instant,
c) Détermination de la différence (A) entre les directions absolues et
d) Normalisation du résultat (I) de l'intégration sur cette différence (A), une nouvelle valeur de correction ($S_{neu}$) étant déterminée en partant d'une valeur de correction ($S_{alt}$), utilisée jusqu'alors, en formant

$$S_{neu} = S_{alt} \bullet \frac{A}{I},$$

**caractérisée par le fait que** la nouvelle valeur de correction est filtrée, la différence (A) entre les directions absolues étant introduite dans la pondération.

**2.** Méthode selon la revendication 1, **caractérisée par le fait que** des satellites sont utilisés comme moyens auxiliaires externes.

**3.** Méthode selon la revendication 1 ou 2, **caractérisée par le fait que** des routes, sur lesquelles le véhicule est projeté, sont utilisées comme moyens auxiliaires externes.

**4.** Méthode selon la revendication 3, **caractérisée par le fait que** les routes sont stockées dans une banque de données.

**5.** Méthode selon l'une des revendications 1 à 4, **caractérisée par le fait qu'**une valeur de correction n'est déterminée que si la différence entre les directions absolues s'élève au moins à 60°.

**6.** Méthode selon l'une des revendications 1 à 5, **caractérisée par le fait que** la valeur de correction n'est déterminée que lorsque, pendant la période de temps entre le premier instant et le deuxième instant, une vitesse angulaire moyenne donnée n'est pas dépassée vers le bas.

Fig.1

Fig.2

Fig.3